# EUROPÄISCHE PATENTSCHRIFT

(11) **EP 4 650 608 B1**
(45) Veröffentlichungstag und Bekanntmachung des Hinweises auf die Patenterteilung: **25.11.2026**
(21) Anmeldenummer: 24175390.4
(22) Anmeldetag: 13.05.2024
(51) Int. Cl.: F16B 2/00

(54) **ANORDNUNG ZUR VERBESSERUNG DER SCHERFESTIGKEIT EINER ZWISCHEN LACKBESCHICHTETEN BAUTEILEN HERGESTELLTEN SCHRAUBVERBINDUNG**
ARRANGEMENT FOR IMPROVING THE SHEARING RESISTANCE OF A THREADED CONNECTION PRODUCED BETWEEN COMPONENTS COATED WITH PAINT
DISPOSITIF POUR AMÉLIORER LA RÉSISTANCE AU CISAILLEMENT D'UN ASSEMBLAGE VISSÉ FORMÉ ENTRE DES ÉLÉMENTS REVÊTUS DE PEINTURE

(43) Veröffentlichungstag der Anmeldung: 19.11.2025
(73) Patentinhaber: Deere & Company, Moline, IL 61265 (US)
(72) Erfinder: SCHIBEL, ACHIM ROLAND, 68163 Mannheim (DE)
(74) Vertreter: Dehnhardt, Florian Christopher

(56) Entgegenhaltungen:
- WO-A1-2007/119841
- WO-A1-2010/118747
- WO-A1-2012/052532
- WO-A1-2019/244048
- WO-A1-2022/079392
- WO-A1-96/24730
- GB-A- 887 161

## Beschreibung

Die Erfindung betrifft eine Anordnung zur Verbesserung der Scherfestigkeit einer zwischen lackbeschichteten Bauteilen hergestellten Schraubverbindung.

Aus Gründen des Korrosionsschutzes und/oder fertigungsbedingt kommt es vor, dass Bauteile in lackiertem Zustand miteinander verschraubt werden müssen. Wenn die Verschraubung auf Scherung beansprucht wird, ist für deren Festigkeit die Haftreibung zwischen den aufeinander gepressten Lackschichten maßgeblich. Bei glatten Lackoberflächen liegt der zugehörige Haftreibungskoeffizient in der Größenordnung von lediglich µ_{H} < 0,1.

Eine gängige Maßnahme zur Erhöhung der Festigkeit der Verschraubung sieht daher die Verwendung von reibungserhöhenden Einlagen zwischen den zu verbindenden Bauteilen vor. Bekannt sind unter anderen haftpartikelbeschichtete Vliesstoffe oder diamantstaubbeschichtete Blechscheiben. Deren Kosten sind vergleichsweise hoch. WO2007119841A1 offenbart eine gattungsgemäße Anordnung zur Verbesserung der Scherfestigkeit einer zwischen lackbeschichteten Bauteilen hergestellten Schraubverbindung.

Es ist daher Aufgabe der vorliegenden Erfindung, eine kostengünstige Anordnung der eingangs genannten Art anzugeben, die den Anforderungen zu verschraubender lackierter Bauteile entsprechend Rechnung trägt.

Diese Aufgabe wird durch eine Anordnung zur Verbesserung der Scherfestigkeit einer zwischen lackbeschichteten Bauteilen hergestellten Schraubverbindung mit den Merkmalen des Patentanspruchs 1 gelöst.

Die Anordnung zur Verbesserung der Scherfestigkeit einer zwischen lackbeschichteten Bauteilen hergestellten Schraubverbindung umfasst erste und zweite lackbeschichtete Bauteile, die in verschraubtem Zustand einander zugewandte ebene erste und zweite Befestigungsabschnitte umfassen, sowie ein dazwischen verlaufendes Reibblech, das in flächigem Kontakt mit den beiden Befestigungsabschnitten steht, wobei in das Reibblech beiderseits vollflächig eine Oberflächenstruktur zur Reibwerterhöhung gegenüber der auf den beiden Befestigungsabschnitten 2jeweils befindlichen Lackschicht eingearbeitet ist.

Mit anderen Worten ist die Oberflächenstruktur unmittelbar in das Reibblech eingearbeitet bzw. eingebracht. Bei dem Reibblech handelt es sich typischerweise um eine aus einer entsprechenden Stahllegierung bestehende Metallplatte. Um eine unerwünschte Korrosion der Metallplatte zu verhindern, kann die verwendete Stahllegierung korrosionshemmende Eigenschaften aufweisen oder aber nach Einbringen der Oberflächenstruktur in geeigneter Weise oberflächenbehandelt werden. Hierbei hat sich eine Blechstärke im Bereich von 0,5 bis 3,0 mm bewährt, den jeweiligen Anforderungen entsprechend kann diese jedoch auch größer sein. Der Zuschnitt kann individuell entsprechend der Kontur der zu verbindenden Befestigungsabschnitte erfolgen, beispielsweise mittels einer CNC-gesteuerten Laserschneidemaschine.

Die erfindungsgemäße Anordnung macht sich die Eigenschaft vieler Lacke zunutze, dass diese unter erhöhtem Druck zu fließen beginnen und sich daher den durch die Oberflächenstruktur des Reibblechs gebildeten Unebenheiten von selbst angleichen. Eine Verwendung besonderer Beschichtungsmaterialien wie Diamant oder Korund, die vorrangig bei blanken und daher vergleichsweise harten Metalloberflächen vonnöten sind, erübrigt sich somit. Das im Falle der erfindungsgemäßen Anordnung vorgesehene Reibblech ist daher besonders kostengünstig herstellbar.

Vorteilhafte Weiterbildungen der erfindungsgemäßen Anordnung gehen aus den Unteransprüchen hervor.

Es hat sich herausgestellt, dass sich die Festigkeit der Verschraubung maßgeblich erhöhen lässt, wenn die Oberflächenstruktur eine Rauhigkeit mit einem Ra-Wert in der Größenordnung von 0,8 bis 2,5 µm und/oder mit einem Rz-Wert in der Größenordnung von 5 bis 63 µm aufweist. Die Wahl eines geeigneten Ra/Rz-Wertepaars hängt unter anderem von den Eigenschaften des verwendeten Lacks ab. So bestehen gewisse Unterschiede hinsichtlich Nass- und Pulverlacken sowie des Schichtaufbaus. Das für die betreffenden Anwendung geeignete Ra/Rz-Wertepaar lässt sich anhand von Versuchsreihen unschwer ermitteln.

Ferner ist die Oberflächenstruktur in Form von Schleifriefen in das Reibblech eingearbeitet. Diese werden mittels eines Schleifbands entsprechender Körnung hergestellt, wobei die dabei erzeugten scharfkantigen Schleifgrate zu einer verbesserten Ineingriffnahme der Oberflächenstruktur in die Lackschicht der zu verbindenden Bauteile führen. In einem nicht erfindungsgemäßen Ausführungsbeispiel ist eine Strukturierung der Oberfläche auch durch Sand- oder Glasperlenstrahlen denkbar. Beide Bearbeitungsmethoden stellen keine besonderen Anforderungen an ihre Umsetzung.

Im Ergebnis ist aufgrund der vorstehend beschriebenen Maßnahmen alleine oder in Kombination miteinander eine Erhöhung des Haftreibungskoeffizienten bei der Verschraubung lackbeschichteter Bauteile von µ_{H} < 0,1 auf µ_{H} > 0,4 möglich. Dies entspricht einer Zunahme der Scherfestigkeit um mehr als das 4-fache.

Die erfindungsgemäße Anordnung wird im Folgenden anhand der beigefügten Zeichnungen näher erläutert. Dabei beziehen sich identische Bezugszeichen auf übereinstimmende oder bezüglich ihrer Funktion vergleichbare Komponenten. Es zeigen:
- Fig. 1: eine im Schnitt schematisch dargestellte Anordnung zur Verbesserung der Scherfestigkeit einer zwischen lackbeschichteten Bauteilen hergestellten Schraubverbindung, und
- Fig. 2: die in Fig. 1 wiedergegebene Anordnung in demontiertem Zustand.

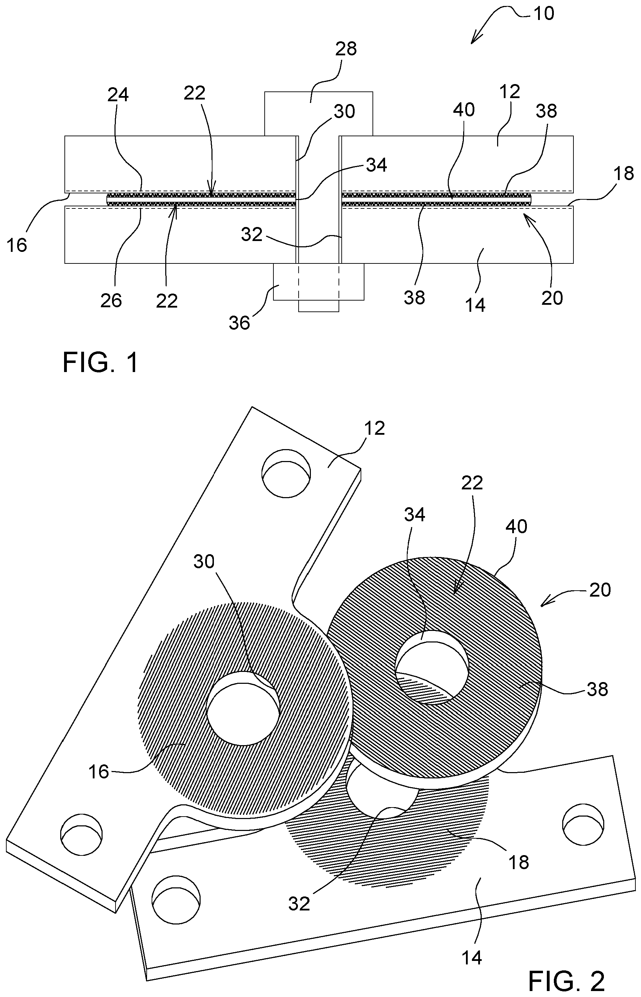

Fig. 1 zeigt eine im Schnitt schematisch dargestellte Anordnung zur Verbesserung der Scherfestigkeit einer zwischen lackbeschichteten Bauteilen hergestellten Schraubverbindung.

Genauer gesagt umfasst die Anordnung 10 erste und zweite lackbeschichtete Bauteile 12, 14, die in verschraubtem Zustand einander zugewandte ebene erste und zweite Befestigungsabschnitte 16, 18 umfassen. Dazwischen verläuft ein Reibblech 20, das in flächigem Kontakt mit den beiden Befestigungsabschnitten 16, 18 steht. In das Reibblech 20 ist beiderseits vollflächig eine Oberflächenstruktur 22 zur Reibwerterhöhung gegenüber der auf den beiden Befestigungsabschnitten 16, 18 jeweils befindlichen Lackschicht 24, 26 eingearbeitet.

Die Verschraubung ist mittels eines Schraubbolzens 28 hergestellt, der sich durch miteinander fluchtende Befestigungsöffnungen 30, 32, 34 in den beiden lackbeschichteten Bauteilen 12, 14 sowie dem Reibblech 20 erstreckt und mittels einer Gegenmutter 36 gesichert ist. Abhängig vom Anzugsmoment der Verschraubung lässt sich der Anpressdruck zwischen den beiden Befestigungsabschnitten 16, 18 sowie dem Reibblech 20 entsprechend vorgeben.

Wie in Fig. 2 angedeutet ist, ist die Oberflächenstruktur 22 unmittelbar in das Reibblech 20 eingearbeitet bzw. eingebracht. Vorliegend ist die Oberflächenstruktur 22 in Form von Schleifriefen 38 in das Reibblech 20 eingearbeitet. Diese werden mittels eines Schleifbands entsprechender Körnung hergestellt, wobei die dabei erzeugten scharfkantigen Schleifgrate zu einer verbesserten Ineingriffnahme der Oberflächenstruktur 22 in die Lackschicht 24, 26 der zu verbindenden Bauteile 12, 14 führen. In einem nicht erfindungsgemäßen Ausführungsbeispiel ist eine Strukturierung der Oberfläche auch durch Sand- oder Glasperlenstrahlen denkbar.

Die Anordnung 10 macht sich die Eigenschaft vieler Lacke zunutze, dass diese unter erhöhtem Druck zu fließen beginnen und sich daher den durch die Oberflächenstruktur 22 des Reibblechs 20 gebildeten Unebenheiten von selbst angleichen (siehe die in Fig. 2 dargestellten Veränderungen in der Lackschicht 24, 26 im Bereich der beiden Befestigungsabschnitte 16, 18, die ein zusätzliches Aufrauen überflüssig machen).

Bei dem Reibblech 20 handelt es sich um eine aus einer entsprechenden Stahllegierung bestehende Metallplatte 40. Um eine unerwünschte Korrosion der Metallplatte 40 zu verhindern, weist die verwendete Stahllegierung korrosionshemmende Eigenschaften auf oder wird nach Einbringen der Oberflächenstruktur 22 in geeigneter Weise oberflächenbehandelt. Die Blechstärke liegt im Bereich von 0,5 bis 2,0 mm. Der Zuschnitt erfolgt individuell entsprechend der Kontur der beiden zu verbindenden Befestigungsabschnitte 16, 18, beispielsweise mittels einer CNC-gesteuerten Laserschneidemaschine.

In Fig. 2 ist das Reibblech 20 als runde Beilagscheibe ausgebildet, diese kann jedoch auch eine beliebige andere, den jeweiligen Gegebenheiten entsprechende Form aufweisen.

Die Oberflächenstruktur 22 weist eine Rauhigkeit mit einem Ra-Wert in der Größenordnung von 0,8 bis 2,5 µm und/oder mit einem Rz-Wert in der Größenordnung von 5 bis 63 µm auf. Die Wahl eines geeigneten Ra/Rz-Wertepaars hängt unter anderem von den Eigenschaften des verwendeten Lacks ab. So bestehen gewisse Unterschiede hinsichtlich Nass- und Pulverlacken sowie des Schichtaufbaus. Das für die betreffenden Anwendung geeignete Ra/Rz-Wertepaar wird anhand von Versuchsreihen ermittelt.

## Patentansprüche

1. Anordnung zur Verbesserung der Scherfestigkeit einer zwischen lackbeschichteten Bauteilen hergestellten Schraubverbindung, mit ersten und zweiten lackbeschichteten Bauteilen (12, 14), die in verschraubtem Zustand einander zugewandte ebene erste und zweite Befestigungsabschnitte (16, 18) umfassen, und mit einem dazwischen verlaufenden Reibblech (20), das in flächigem Kontakt mit den beiden Befestigungsabschnitten (16, 18) steht, wobei in das Reibblech (20) beiderseits vollflächig eine Oberflächenstruktur (22) zur Reibwerterhöhung gegenüber der auf den beiden Befestigungsabschnitten (16, 18) jeweils befindlichen Lackschicht (24, 26) eingearbeitet ist, **dadurch gekennzeichnet, dass** die Oberflächenstruktur (22) in Form von Schleifriefen (38) in das Reibblech (20) eingearbeitet ist.

2. Anordnung nach Anspruch 1, **dadurch gekennzeichnet, dass** die Oberflächenstruktur (22) eine Rauhigkeit mit einem Ra-Wert in der Größenordnung von 0,8 bis 2,5 µm und/oder mit einem Rz-Wert in der Größenordnung von 5 bis 63 µm aufweist.

## Claims

1. Arrangement for improving the shear strength of a screw connection produced between lacquer-coated components, having first and second lacquer-coated components (12, 14) which, in the screwed state, comprise mutually facing planar first and second fastening portions (16, 18), and having a friction plate (20) which extends therebetween and is in areal contact with the two fastening portions (16, 18), wherein a surface structure (22) for increasing the coefficient of friction in relation to the respective lacquer layers (24, 26) situated on the two fastening portions (16, 18) is formed in the friction plate (20) over the whole surface area on both sides, **characterized in that** the surface structure (22) is formed in the friction plate (20) in the form of grinding grooves (38).

2. Arrangement according to Claim 1, **characterized in that** the surface structure (22) has a roughness with an Ra value in the range of 0.8 to 2.5 µm and/or with an Rz value in the range of 5 to 63 µm.

## Revendications

1. Agencement destiné à améliorer la résistance au cisaillement d'un assemblage vissé réalisé entre des composants revêtus de peinture, comprenant des premier et deuxième composants revêtus de peinture (12, 14), qui comprennent des premier et deuxième tronçons de fixation plans (16, 18) se faisant face à l'état vissé, et une tôle de friction (20) s'étendant entre ceux-ci et se trouvant en contact surfacique avec les deux tronçons de fixation (16, 18), une structure de surface (22) destinée à augmenter le coefficient de frottement par rapport à la couche de peinture (24, 26) se trouvant respectivement sur les deux tronçons de fixation (16, 18) étant réalisée sur toute la surface des deux côtés de la tôle de friction (20), **caractérisé en ce que** la structure de surface (22) est réalisée dans la tôle de friction (20) sous la forme de stries de meulage (38).

2. Agencement selon la revendication 1, **caractérisé en ce que** la structure de surface (22) présente une rugosité ayant une valeur Ra de l'ordre de 0,8 à 2,5 µm et/ou une valeur Rz de l'ordre de 5 à 63 µm.
